# EUROPEAN PATENT SPECIFICATION

(11) **EP 4 353 989 B1**
(45) Date of publication and mention of the grant of the patent: **04.02.2026**
(21) Application number: 23156440.2
(22) Date of filing: 14.02.2023
(51) Int. Cl.: F16G 3/10, F16G 13/12, F16G 15/12

(54) **ASSURANCE CHAIN AND PREPARATION METHOD FOR THE SAME**
SICHERUNGSKETTE UND HERSTELLUNGSVERFAHREN DAFÜR
CHAÎNE D'ASSURANCE ET SON PROCÉDÉ DE PRÉPARATION

(30) Priority: 13.10.2022 CN 202211251225
(43) Date of publication of application: 17.04.2024
(73) Proprietor: Dongguan Polyunion Textile Technology Co. Ltd., Dongguan, Guangdong (CN)
(72) Inventor: Jing, Bei, Dongguan (CN)
(74) Representative: Zaboliene, Reda

(56) References cited:
- WO-A2-2018/231063

## Description

### TECHNICAL FIELD

The present disclosure relates to the technical field of assurance chains, in particular to an assurance chain, and a preparation method for the assurance chain.

### BACKGROUND

Rock climbing is a kind of mountaineering sport. Climbers often climb rock cliffs or artificial rock walls. During climbing, climbers use their bodies to fight against the gravity of the earth, to experience psychological thrill and shock. Climbers may experience the great psychological fear when sliding down suddenly in a high altitude. So, climbers need to use the quickdraw as a connection and protection point.

The quickdraw braided rope in the existing market is made by the following steps: folding a flat belt in half, sewing the flat belt to form a circle, placing another flat belt in the circular flat belt, then sewing the another flat belt to form another circle, repeating several times to form an assurance chain. However, there is a gap at a connection of both ends of one single chain link, causing a weak connection at the both ends of the chain link. The stress at the gap is relatively concentrated after the assurance chain bears the weight, so the assurance chain may break.

At the same time, only both ends of the assurance chain have strong tension, each middle chain link has small tension, resulting in an uneven stress.
The document WO2018231063 describes a method for forming a flexible loop made of one or more continuous flexible strands, coiled around itself to form a bundle of predetermined thickness. These loops can be linked to form a chain, useful in applications such as mooring, lifting, and securing cargo. The loops can be reinforced with a protective mantle for durability.
To achieve specific technical benefits superior to known art - such as precision control of yarn tension and speed, improved product quality, cost-effectiveness, and flexibility in manufacturing - a new chain preparation method has been invented that combines the use of active and passive winding machines.

### SUMMARY

The present disclosure provides an assurance chain, and a preparation method for the assurance chain, the assurance chain can eliminate a gap at a connection of both ends of one single chain link.

One technical solution of the present disclosure is a preparation method for an assurance chain, which includes taking a first flat belt and forming a circle along a first annular mold; winding a yarn on the first circular flat belt, then sewing the first circular flat belt, to form a first chain link, wherein the first chain link includes the yarn and the first circular flat belt sleeved around the yarn; taking a n^{th} flat belt and forming a circle along a second annular mold, wherein the n^{th} flat belt passes through a (n-1)^{st} chain link, and n is a natural number greater than 1; and winding a yarn on the n^{th} circular flat belt, then sewing the n^{th} circular flat belt, to form a n^{th} chain link, further to form the assurance chain having n chain links, and the n^{th} chain link includes the yarn and the n^{th} circular flat belt sleeved around the yarn.

Furthermore, the second annular mold defines an opening, and the (n-1)^{st} chain link is sleeved on the second annular mold by the opening, and the n^{th} flat belt is arranged along the second annular mold to form a circle and passes through the (n-1)^{st} chain link.

Furthermore, the step of "winding a yarn on the first circular flat belt" includes: arranging the first annular mold on an active winding machine; and winding the yarn on the first circular flat belt by the active winding machine.

Furthermore, the step of "winding a yarn on the n^{th} circular flat belt" includes: arranging the second annular mold on a passive winding machine; and winding the yarn on the n^{th} circular flat belt by the passive winding machine.

Furthermore, a length of the first flat belt is 50-70 cm, and a width of the first flat belt is 3-5 cm.

Furthermore, a length of the second flat belt is 15-30 cm, and a width of the second flat belt is equal to that of the first flat belt.

Furthermore, the first flat belt and the second flat belt are polyester flat belts or nylon flat belts, and a diameter of the yarn is 1-5mm.

Furthermore, sutures for the first flat belt and the n^{th} flat belt are nylon wires, the nylon wire has a diameter of 0.1-0.5mm.

Furthermore, n is 7, 8, or 9.

Another technical solution of the present disclosure provides an assurance chain, the assurance chain is prepared by the preparation method as described above.

The technical advantages of the present disclosure include: the preparation method of the present disclosure is different from the traditional preparation method, the preparation method of the present disclosure includes: taking a first flat belt and forming a circle along a first annular mold; winding a yarn on the first circular flat belt, then sewing the first circular flat belt, to form a first chain link, wherein the first chain link includes the yarn and the first circular flat belt sleeved around the yarn; taking a n^{th} flat belt and forming a circle along a second annular mold, wherein the n^{th} flat belt passes through a (n-1)^{st} chain link, and n is a natural number greater than 1; and winding a yarn on the n^{th} circular flat belt, then sewing the n^{th} circular flat belt, to form a n^{th} chain link, further to form the assurance chain having n chain links, and the n^{th} chain link includes the yarn and the n^{th} circular flat belt sleeved around the yarn. In the assurance chain of the present disclosure, each flat belt is wound with the yarn, so there is a force between the yards of two adjacent chain links to eliminate a gap at a connection of both ends of one single chain link, so a chain fracture due to a stress concentration may be avoided and each chain link in the assurance chain is evenly stressed.

### BRIEF DESCRIPTION OF THE DRAWINGS

To illustrate the technical solutions according to the embodiments of the present disclosure or in the prior art more clearly, the accompanying drawings for describing the embodiments or the prior art are introduced briefly in the following. Apparently, the accompanying drawings in the following description are only about some embodiments of the present disclosure, and persons of ordinary skill in the art can derive other drawings from the accompanying drawings without creative efforts.
FIG. 1 is a flow chart of a preparation method for an assurance chain according to an embodiment of the present disclosure;
FIG. 2 is a structural diagram of a first annular mold according to an embodiment of the present disclosure;
FIG. 3 is a structural diagram of winding a yard by the first annular mold of the present disclosure;
FIG. 4 is a structural diagram of a first flat belt wound with a yard of the present disclosure;
FIG. 5 is a structural diagram of one single chain link of the present disclosure;
FIG. 6 is a structural diagram of a second annular mold according to an embodiment of the present disclosure;
FIG. 7 is a structural diagram of winding a yard by the second annular mold of the present disclosure;
FIG. 8 is a structural diagram of an assurance chain of the present disclosure.

### DETAILED DESCRIPTION OF THE EMBODIMENTS

The technical solutions of the embodiments of the present disclosure will be clearly and completely described in the following with reference to the accompanying drawings. It is obvious that the embodiments to be described are only a part rather than all of the embodiments of the present disclosure. All other embodiments obtained by persons skilled in the art based on the embodiments of the present invention without creative efforts shall fall within the protection scope of the present invention.

The "embodiments" in the description means that specific features, structures or characteristics described in connection with embodiments may be included in at least one embodiment of the present disclosure. The phrase appearing in various positions in the specification does not necessarily refer to the same embodiment, nor is it an independent or alternative embodiment mutually exclusive with other embodiments. Those skilled in the art explicitly and implicitly understand that the embodiments described herein can be combined with other embodiments.

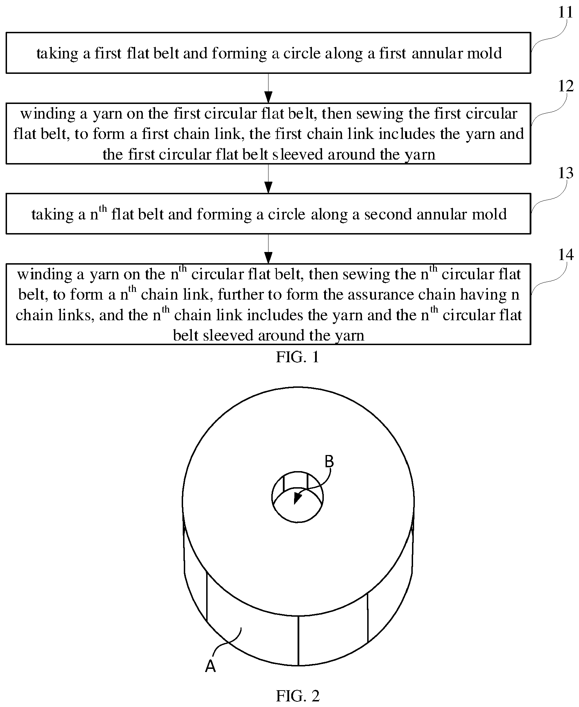

Referring to FIG. 1, FIG. 1 is a flow chart of a preparation method for an assurance chain according to an embodiment of the present disclosure. The method includes:
Step 11: taking a first flat belt and forming a circle along a first annular mold.

Referring to FIG. 2, the first flat belt can form a circle along an outer circumference A of the first annular mold.

Step 12: winding a yarn on the first circular flat belt, then sewing the first circular flat belt, to form a first chain link, the first chain link includes the yarn and the first circular flat belt sleeved around the yarn.

A center portion of the first annular mold defines a through hole B, an active winding machine passes through the through hole B, so the first annular mold sleeves on the active winding machine.

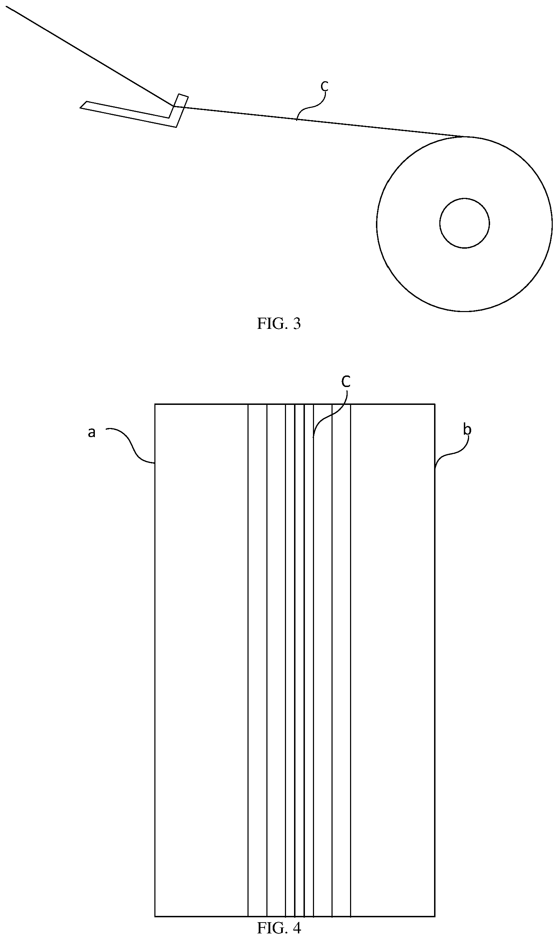

At this time, the first annular mold can be arranged on the active winding machine by the through hole B. The active winding machine is used to wind the yarn on the first circular flat belt. Specifically, the active winding machine rotates to wind the yarn on the first circular flat belt. It can be understood that, the yarn is wound on the first circular flat belt along the outer circumference A of the first annular mold. Specifically, as shown in FIG. 3, the first annular mold is arranged on the active winding machine, and the active yarn machine is used to wind the yarn C on the first circular flat belt.

After winding, a sewing machine is adopted to sew the first circular flat belt, the first circular flat belt sleeves around the yard to form the first chain link.

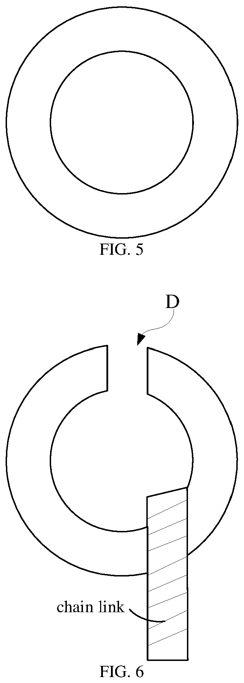

As shown in FIG. 4, a first edge a of the first circular flat belt is sewed with a second edge b of the first circular flat belt by the sewing machine, the first circular flat belt sleeves around the yarn to form the first chain link as shown in FIG. 5. A sewing route after sewing is also circular.

Step 13: taking a n^{th} flat belt and forming a circle along a second annular mold.

The n^{th} flat belt passes through the (n-1)^{st} chain link, and n is a natural number greater than 1.

As shown in FIG. 6, the second annular mold defines an opening D, and the (n-1)^{st} chain link is sleeved on the second annular mold by the opening D, and then the (n-1)^{st} flat belt is arranged along the second annular mold to form a circle and passes through the (n-1)^{st} chain link.

Step 14: winding a yarn on the n^{th} circular flat belt, then sewing the n^{th} circular flat belt, to form a n^{th} chain link, further to form the assurance chain having n chain links, and the n^{th} chain link includes the yarn and the n^{th} circular flat belt sleeved around the yarn.

The second annular mold is arranged on a passive winding machine, the passive winding machine is used to wind the yarn on the n^{th} circular flat belt.

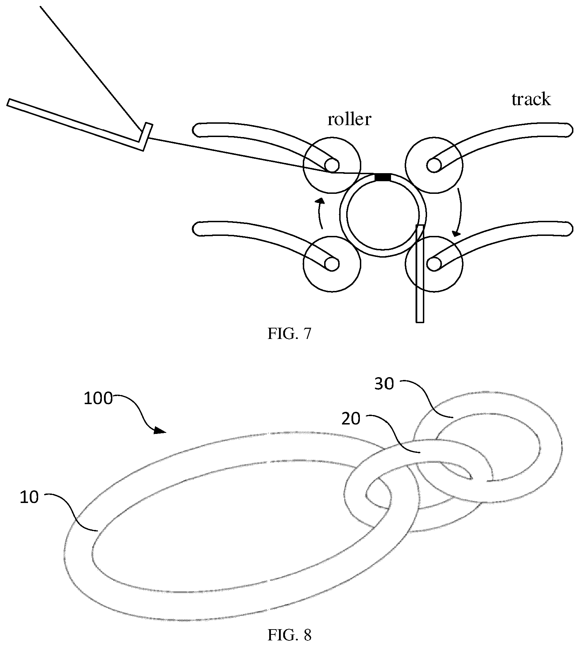

Specifically, as shown in FIG. 7, the yarn is sleeved on the n^{th} circular flat belt, and the n^{th} circular flat belt is sewed after the winding process is completed, so that the n^{th} circular flat belt sleeves around the yarn, to form the n^{th} chain link, further to form the assurance chain with n chain links.

That is, by the track and rollers shown in FIG. 7, the rollers rotate to drive the second annular mold to rotate, so the yarn sleeves on the n^{th} circular flat belt. Further, the position of the roller can be adjusted independent of the rail, so the roller can be adapted to the second annular mold of different sizes.

The sewing mode of the n^{th} circular flat belt is the same as that of the first circular flat belt, there is no need to repeat.

In this way, according to the actual needs, multiple interlocked chain links can be formed according to step 13 and step 14. For example, there are seven interlocked chain links, eight interlocked chain links, nine interlocked chain links, or ten interlocked chain links.

In some embodiments, a length of the first flat belt is 50-70 cm, and a width of the first flat belt is 3-5 cm.

In some embodiments, a length of the second flat belt is 15-30 cm, and a width of the second flat belt is equal to that of the first flat belt.

In some embodiments, the first flat belt and the second flat belt are polyester flat belts or nylon flat belts, and a diameter of the yarn is 1-5mm.

In some embodiments, the sutures for the first flat belt and the n^{th} flat belt are nylon wires, the nylon wire has a diameter of 0.1-0.5mm.

In some embodiments, n is 7.

In some embodiments, n is 8.

In some embodiments, n is 9.

In the above embodiment, each flat belt is wound with the yarn, so there is a force between the yards of two adjacent chain links to eliminate a gap at a connection of both ends of one single chain link, so a chain fracture due to a stress concentration may be avoided and each chain link in the assurance chain is evenly stressed.

Referring to FIG. 8, FIG. 8 is a structural diagram of an assurance chain according to an embodiment of the present disclosure. The assurance chain 100 includes a first chain link 10, a second chain link 20, and a third chain link 30. The assurance chain 100 is prepared by the preparation method according to any of the above embodiments. The number of chain links in the assurance chain 100 can be set according to the actual needs, such as seven chain links, eight chain links, or nine chain links.

To sum up, in the assurance chain of the present disclosure, each flat belt is wound with the yarn, so there is a force between the yards of two adjacent chain links to eliminate a gap at a connection of both ends of one single chain link, so a chain fracture due to a stress concentration may be avoided and each chain link in the assurance chain is evenly stressed.

In the exemplary embodiments of the present disclosure, it is to be understood that, the device and system described herein can be achieved in other manners. For example, the configuration of the device according to the exemplary embodiment described above is only exemplary; the division of units or modules in the device is a kind of division according to logical function, therefore there can be other divisions in practice. For example, multiple units or components can be combined or integrated into another system; or, some features can be ignored while some units need not to be executed.

The unit described as separated components may be or not be separated physically, and a component shown as a unit may be or not be a physical unit, that is to say it may be located in one position or may be distributed on multiple network units. Some or all of the units may be chosen to achieve the object of the embodiment as required actually.

In addition, each functional unit in each embodiment of the present disclosure can be integrated in a processing unit, or each unit can exist physically independently, or two or more units can be integrated in one unit. The integrated units mentioned above can be realized in the form of hardware or software functional units.

If the integrated unit in the above other embodiments is implemented in the form of a software functional unit and sold or used as an independent product, it can be stored in a computer readable storage medium. Based on this understanding, the technical solution of the present disclosure, in essence, or the part that contributes to the prior art, or the whole or part of the technical solution, can be embodied in the form of a software product, which is stored in a storage medium, a number of instructions are included to enable a computer device (which may be a personal computer, a server, or a network device, etc.) or a processor to execute all or part of the steps of the method described in various embodiments of the present disclosure. The aforementioned storage media include: USB flash disk, mobile hard disk, read only memory (ROM), random access memory (RAM), magnetic disc or optical disc and other media that can store program codes.

The above description is only about some embodiments of the present disclosure, and is not intended to limit the patent scope of the present disclosure.

## Claims

1. A preparation method for an assurance chain (100), comprising
taking a first flat belt and forming a circle along a first annular mold;
winding a yarn on the first circular flat belt, then sewing the first circular flat belt, to form a first chain link (10), wherein the first chain link (10) comprises the yarn and the first circular flat belt sleeved around the yarn;
taking a n^{th} flat belt and forming a circle along a second annular mold, wherein the n^{th} flat belt passes through a (n-1)^{st} chain link, and n is a natural number greater than 1; and
winding a yarn on the n^{th} circular flat belt, then sewing the n^{th} circular flat belt, to form a n^{th} chain link, further, to form the assurance chain (100) having n chain links, and the n^{th} chain link comprises the yarn and the n^{th} circular flat belt sleeved around the yarn;
**characterized in that**
using an active winding machine, when winding a yarn on the first circular flat belt, wherein the active winding machine passes through a through hole B, so the first annular mold sleeves by the active winding machine;
using a passive winding machine, wherein the rollers rotate to drive the second annular mold to rotate, so the yarn sleeves on the n^{th} circular flat belt, when winding a yarn on the n^{th} circular flat belt.

2. The method of claim 1, wherein the second annular mold defines an opening (D), and the (n-1)^{st} chain link is sleeved on the second annular mold by the opening (D), and the (n-1)^{st} flat belt is arranged along the second annular mold to form a circle and passes through the (n-1)^{st} chain link.

3. The method of claim 1, wherein a length of the first flat belt is 50-70 cm, and a width of the first flat belt is 3-5 cm.

4. The method of claim 1, wherein a length of the second flat belt is 15-30 cm, and a width of the second flat belt is equal to that of the first flat belt.

5. The method of claim 1, wherein the first flat belt and the second flat belt are polyester flat belts or nylon flat belts, and a diameter of the yarn is 1-5 mm.

6. The method of claim 1, wherein sutures for the first flat belt and the n^{th} flat belt are nylon wires, the nylon wire has a diameter of 0,1-0,5 mm.

7. The method of claim 1, wherein n is 7, 8, or 9.

8. An assurance chain (100), wherein the assurance chain (100) is prepared by the preparation method as recited in any one of claims 1 to 7.

## Patentansprüche

1. Ein Verfahren zur Herstellung einer Sicherungskette (100), umfassend:
Nehmen eines ersten Flachbandes und Bilden eines Kreises entlang einer ersten ringförmigen Form;
Wickeln eines Garns auf das erste kreisförmige Flachband, dann Vernähen des ersten kreisförmigen Flachbandes, um ein erstes Kettenglied (10) zu bilden, wobei das erste Kettenglied (10) das Garn und das erste kreisförmige Flachband, welches das Garn umschließt, umfasst;
Nehmen eines n-ten Flachbandes und Bilden eines Kreises entlang einer zweiten ringförmigen Form, wobei das n-te Flachband durch ein (n-1)-tes Kettenglied verläuft und n eine natürliche Zahl größer als 1 ist; und
Wickeln eines Garns auf das n-te kreisförmige Flachband, dann Vernähen des n-ten kreisförmigen Flachbandes, um ein n-tes Kettenglied zu bilden, um weiter die Sicherungskette (100) mit n Kettengliedern zu bilden, und wobei das n-te Kettenglied das Garn und das n-te kreisförmige Flachband, welches das Garn umschließt, umfasst;
**dadurch gekennzeichnet, dass**
unter Verwendung einer aktiven Wickelmaschine, wenn ein Garn auf das erste kreisförmige Flachband gewickelt wird, wobei die aktive Wickelmaschine durch ein Durchgangsloch (B) verläuft, sodass die erste ringförmige Form auf die aktive Wickelmaschine aufgesteckt ist;
unter Verwendung einer passiven Wickelmaschine, wobei die Rollen rotieren, um die zweite ringförmige Form zur Rotation anzutreiben, sodass das Garn auf das n-te kreisförmige Flachband aufgezogen wird, wenn ein Garn auf das n-te kreisförmige Flachband gewickelt wird.

2. Das Verfahren nach Anspruch 1, wobei die zweite ringförmige Form eine Öffnung (D) definiert und das (n-1)-te Kettenglied durch die Öffnung (D) auf die zweite ringförmige Form aufgesteckt wird, und das n-te Flachband entlang der zweiten ringförmigen Form angeordnet wird, um einen Kreis zu bilden, und durch das (n-1)-te Kettenglied verläuft.

3. Das Verfahren nach Anspruch 1, wobei eine Länge des ersten Flachbandes 50-70 cm beträgt und eine Breite des ersten Flachbandes 3-5 cm beträgt.

4. Das Verfahren nach Anspruch 1, wobei eine Länge des zweiten Flachbandes 15-30 cm beträgt und eine Breite des zweiten Flachbandes gleich derjenigen des ersten Flachbandes ist.

5. Das Verfahren nach Anspruch 1, wobei das erste Flachband und das zweite Flachband Polyester-Flachbänder oder Nylon-Flachbänder sind und ein Durchmesser des Garns 1-5 mm beträgt.

6. Das Verfahren nach Anspruch 1, wobei Fäden zum Vernähen für das erste Flachband und das n-te Flachband Nylondrähte sind, wobei der Nylondraht einen Durchmesser von 0.1-0.5 mm aufweist.

7. Das Verfahren nach Anspruch 1, wobei n 7, 8 oder 9 ist.

8. Eine Sicherungskette (100), wobei die Sicherungskette (100) durch das Herstellungsverfahren nach einem der Ansprüche 1 bis 7 hergestellt ist.

## Revendications

1. Un procédé de préparation d'une chaîne d'assurance (100), comprenant:
le fait de prendre une première sangle plate et de former un cercle le long d'un premier moule annulaire;
l'enroulement d'un fil sur la première sangle plate circulaire, puis la couture de la première sangle plate circulaire, pour former un premier maillon de chaîne (10), dans lequel le premier maillon de chaîne (10) comprend le fil et la première sangle plate circulaire manchonnée autour du fil;
le fait de prendre une n-ième sangle plate et de former un cercle le long d'un second moule annulaire, dans lequel la n-ième sangle plate passe à travers un (n-1)-ième maillon de chaîne, et n est un entier naturel supérieur à 1; et
l'enroulement d'un fil sur la n-ième sangle plate circulaire, puis la couture de la n-ième sangle plate circulaire, pour former un n-ième maillon de chaîne, pour former en outre la chaîne d'assurance (100) ayant n maillons de chaîne, et le n-ième maillon de chaîne comprend le fil et la n-ième sangle plate circulaire manchonnée autour du fil;
**caractérisé en ce que**:
on utilise une bobineuse active, lors de l'enroulement d'un fil sur la première sangle plate circulaire, dans lequel la bobineuse active passe à travers un trou traversant (B), de sorte que le premier moule annulaire est emmanché par la bobineuse active;
on utilise une bobineuse passive, dans laquelle les rouleaux tournent pour entraîner le second moule annulaire en rotation, de sorte que le fil s'emmanche sur la n-ième sangle plate circulaire, lors de l'enroulement d'un fil sur la n-ième sangle plate circulaire.

2. Le procédé selon la revendication 1, dans lequel le second moule annulaire définit une ouverture (D), et le (n-1)-ième maillon de chaîne est emmanché sur le second moule annulaire par l'ouverture (D), et la n-ième sangle plate est disposée le long du second moule annulaire pour former un cercle et passe à travers le (n-1)-ième maillon de chaîne.

3. Le procédé selon la revendication 1, dans lequel une longueur de la première sangle plate est de 50 à 70 cm, et une largeur de la première sangle plate est de 3 à 5 cm.

4. Le procédé selon la revendication 1, dans lequel une longueur de la seconde sangle plate est de 15 à 30 cm, et une largeur de la seconde sangle plate est égale à celle de la première sangle plate.

5. Le procédé selon la revendication 1, dans lequel la première sangle plate et la seconde sangle plate sont des sangles plates en polyester ou des sangles plates en nylon, et un diamètre du fil est de 1 à 5 mm.

6. Le procédé selon la revendication 1, dans lequel des fils de couture pour la première sangle plate et la n-ième sangle plate sont des fils de nylon, le fil de nylon ayant un diamètre de 0.1 à 0.5 mm.

7. Le procédé selon la revendication 1, dans lequel n est 7, 8 ou 9.

8. Une chaîne d'assurance (100), dans laquelle la chaîne d'assurance (100) est préparée par le procédé de préparation tel qu'énoncé dans l'une quelconque des revendications 1 à 7.
